# EUROPÄISCHE PATENTSCHRIFT

(11) **EP 0 723 243 B1**
(45) Veröffentlichungstag und Bekanntmachung des Hinweises auf die Patenterteilung: **17.04.2002**
(21) Anmeldenummer: 96100566.7
(22) Anmeldetag: 16.01.1996
(51) Int. Cl.: G06K 17/00, G06K 13/16, G07D 7/00

(54) **Vorrichtung und Verfahren zur Bearbeitung von dünnem Blattgut, wie z.B. Banknoten**
Device and method for processing thin sheets e.g. banknotes
Dispositif et méthode pour travailler des feuilles fines comme des billets de banques

(30) Priorität: 17.01.1995 DE 19501244
(43) Veröffentlichungstag der Anmeldung: 24.07.1996
(73) Patentinhaber: Giesecke & Devrient GmbH, 81677 München (DE)
(72) Erfinder: Stenzel, Gerhard, Dr., D-82110 Germering (DE); Albert, Bodo, D-81377 München (DE); Buchmann, Klaus, D-81735 München (DE); Schmidt, Alfred, D-81377 München (DE)
(74) Vertreter: Klunker . Schmitt-Nilson . Hirsch

(56) Entgegenhaltungen:
- DE-A- 3 347 607
- DE-A- 4 034 444
- DE-A- 4 443 587
- DE-C- 2 760 453
- US-A- 5 283 828

## Beschreibung

Die Erfindung betrifft eine Vorrichtung zum automatischen Bearbeiten von dünnem Blattgut, wie z.B. Banknoten, und ein entsprechendes Verfahren.

Die Vorrichtung ist aus einzelnen Modulen aufgebaut, die unterschiedliche Aufgaben bei der Bearbeitung der Banknoten bewältigen. Diese Aufgaben können z.B. im Vereinzeln der Banknoten aus einem Stapel, Prüfen der Banknoten auf Zustand oder Echtheit, Steuern des Transportes der Banknoten, Stapeln oder Vernichten der Banknoten bestehen. Weiterhin weist die Vorrichtung eine Steuereinrichtung auf, die die einzelnen Bearbeitungsvorgänge steuert. Die einzelnen Module sowie die Steuereinrichtung sind untereinander so verbunden, daß zwischen ihnen Daten übertragen werden können. Die Daten enthalten die zum Betrieb der Vorrichtung notwendigen Informationen. Dies können beispielsweise Steuerungsbefehle, Programme, Ergebnisdaten oder Referenzdaten sein.

Aus der DE-PS 27 60 453 ist eine solche Bearbeitungsvorrichtung gemäß dem Oberbegriff des Anspruches 1 bekannt. Zum Datenaustausch zwischen der Steuereinrichtung und den Modulen wird ein Zentralspeicher benutzt, auf den sowohl die Module als auch die Steuereinrichtungen zugreifen können. Im Zentralspeicher werden jeweils die Daten abgelegt, die von den einzelnen Komponenten benötigt werden. Zusätzlich sind die Module zum Datenaustausch noch direkt miteinander verbunden.

Die DE-OS 33 47 607 zeigt eine Bearbeitungsvorrichtung, bei der zur optischen Prüfung des Blattguts mehrere gleichartige Module verwendet werden. Die einzelnen Module sind untereinander sowie mit der Steuereinrichtung durch einen Datenbus verbunden. An den Datenbus ist ein übergeordneter Speicher angeschlossen, auf den sowohl die Steuereinrichtung als auch die einzelnen Module zugreifen können.

Die DE - A-40 34 444 offenbart eine Sicherheitseinrichtung, die an die Verbindung zum Datenaustausch von Modulen untereinander und an eine Steuereinrichtung angeschlossen ist und die Funktion der Steuereinrichtung anhand der über die Verbindung ausgetauschten Daten überwacht. Das aus diesem Dokument bekannte Sicherheitsmodul stellt z.B. bei einem handelsüblichen PC sicher, daß nur autorisierte Software auf bestimmte Hardware zugreifen kann (Schutz gegen Viren).

Aus dem US-Patent 5 283 828 ist es bekannt, einen Sicherheitsrechner in einem abgeschlossen Raum unterzubringen.

Generell kann es bei Vorrichtungen der genannten Art aufgrund von Störungen während des Betriebs zu Fehlern bei der Zählung der Banknoten oder bei der richtigen Zuordnung der Banknoten zu entsprechenden Zählerständen in den Modulen kommen. Als Störungen können hier beispielsweise mechanische Störungen, wie Banknotenstaus, elektrische Störungen, Störungen in der Datenverarbeitung oder Störungen durch Fehlbedienungen der Vorrichtung auftreten. Die Folge dieser Störungen ist, daß eine Zählsicherheit bei den Banknoten nur bedingt gewährleistet werden kann.

Bei den bekannten Vorrichtungen sind keine Maßnahmen vorgesehen, diese gegen Datenmanipulationen in betrügerischer Absicht zu sichern. Solche Manipulationen können z.B. in einer Änderung der Programme für die Protokollierung der Bearbeitungsvorgänge oder in einer Änderung der gespeicherten Datensätze bestehen. Durch eine Manipulation dieser Art ist es möglich, sich durch Entnahme von Banknoten aus der Bearbeitungsvorrichtung zu bereichern und gleichzeitig ein Bearbeitungsprotokoll zu erstellen, in dem eine solche Entnahme vertuscht wird.

Ausgehend davon liegt der Erfindung die Aufgabe zugrunde, eine Bearbeitungsvorrichtung zu schaffen, bei der sowohl die Zählsicherheit bei Störungen erhöht, als auch die Sicherheit gegen Manipulationen in betrügerischer Absicht gewährleistet wird.

Diese Aufgabe wird erfindungsgemäß durch die Merkmale der Hauptansprüche sowie die der nebengeordneten Ansprüche gelöst.

Der Grundgedanke besteht im wesentlichen darin, zusätzlich zur Steuereinrichtung wenigstens eine Sicherheitseinrichtung vorzusehen, die mit der Verbindung zum Datenaustausch (z.B. Datenbus) der Module untereinander und mit der Steuereinrichtung verbunden ist. Die Sicherheitseinrichtung ist in der Lage, die Funktion der Steuereinrichtung sowie der Module aufgrund der ausgetauschten Daten zu überwachen.

Auf der Basis der ausgetauschten Daten kann die Sicherheitseinrichtung parallel zur Steuereinrichtung ein Protokoll der Bearbeitungsvorgänge der einzelnen Module erstellen. Durch einen Vergleich der Protokolle von Steuereinrichtung und Sicherheitseinrichtung können Abweichungen bei der Zählung der Banknoten festgestellt und somit die Zählsicherheit erhöht werden.

Zusätzlich kann die Sicherheitseinrichtung feststellen, ob zwischen der Steuereinrichtung und den Modulen oder zwischen den Modulen untereinander Daten ausgetauscht werden, die bei korrektem Betrieb nicht vorgesehen sind und somit auf eine Manipulation in betrügerischer Absicht an der Vorrichtung schließen lassen.

Zur weiteren Erhöhung der Sicherheit kann die Sicherheitseinrichtung durch entsprechende Maßnahmen gegen Manipulationen von außen geschützt werden. Zum einen kann die Sicherheitseinrichtung so ausgelegt werden, daß von den anderen Komponenten nicht auf die Sicherheitseinrichtung zugegriffen werden kann. Eine Abänderung der Daten der Sicherheitseinrichtung durch diese Komponenten wird somit verhindert. Zum anderen kann die Sicherheitseinrichtung z. B. in einem abgeschlossenen Raum, zu dem nur autorisiertes Personal Zugang hat, untergebracht werden, so daß sie physikalisch gegen einen Zugriff von außen gesichert ist.

Vorzugsweise wird die Verbindung zum Datenaustausch der Module untereinander und mit der Steuereinrichtung durch einen Datenbus realisiert. Dieser kann bei Bedarf auch zu einem Netzwerk ausgeweitet werden.

Weitere Merkmale der Erfindung ergeben sich aus den Unteransprüchen. Nachfolgend wird ein Ausführungsbeispiel der Erfindung anhand der Figuren beschrieben. Es zeigen:
- Fig. 1: ein Blockschaltbild der Bearbeitungsvorrichtung und
- Fig. 2: ein Blockschaltbild eines Moduls.

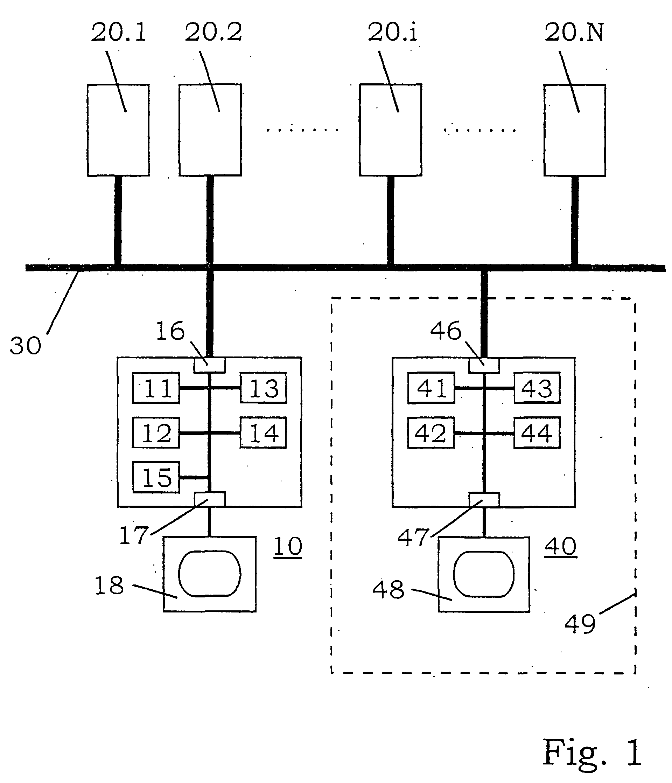

Fig. 1 zeigt ein Blockschaltbild einer erfindungsgemäßen Bearbeitungsvorrichtung bestehend aus einer Steuereinrichtung 10, mehreren Modulen 20.1 bis 20.N, einer Verbindung 30 und einer Sicherheitseinrichtung 40.

Die Steuereinrichtung 10 kann beispielsweise durch einen handelsüblichen Personalcomputer (PC) realisiert werden. Sie besitzt u.a. einen Prozessor 11 und eine Speichereinheit 12, die aus mindestens einem RAM, ROM, EPROM, EEPROM oder ähnlichen Speichern besteht. Im allgemeinen wird der flüchtige RAM-Speicher vom Prozessor 11 während der Ausführung eines Programms genutzt. Die nichtflüchtigen Speicher enthalten Daten, die zum Betrieb der Steuereinrichtung 10 notwendig sind.

Die Speichereinheit 13 dient zur Speicherung von größeren Datenmengen und kann beispielsweise durch Festplatten-Laufwerke, Floppy-Laufwerke, CD-ROM-Laufwerke oder ähnlichem realisiert werden. In der Speichereinheit 13 werden Daten für die Steuereinrichtung 10 oder die Module 20.1 bis 20.N gespeichert. Diese Daten können dann bei Bedarf an die entsprechenden Module 20.i übertragen werden. Optional kann auch ein dem Speicher 13 gleichartiger Speicher 14 vorgesehen werden, auf dem alle Informationen redundant gespeichert werden, so daß bei einer Störung in einem der Speicher 13 oder 14 der jeweils andere Speicher die Daten zur Verfügung stellen kann und somit ein Verlust der Informationen verhindert wird.

Weiterhin kann in der Steuereinrichtung 10 eine optionale Datenfernübertragungseinrichtung (DFÜ-Einrichtung) 15 vorgesehen werden, die eine Kommunikation zwischen der Steuereinrichtung 10 und externen Einrichtungen ermöglicht.

Zur Verbindung der Steuereinrichtung 10 mit der Verbindung 30 dient eine Schnittstelle 16. Über eine Schnittstelle 17 ist ein zur Steuereinrichtung 10 gehörendes Bedienerterminal 18 angeschlossen. Mit Hilfe dieses Bedienerterminals werden die notwendigen Daten vom Bediener in die Steuereinrichtung 10 eingegeben.

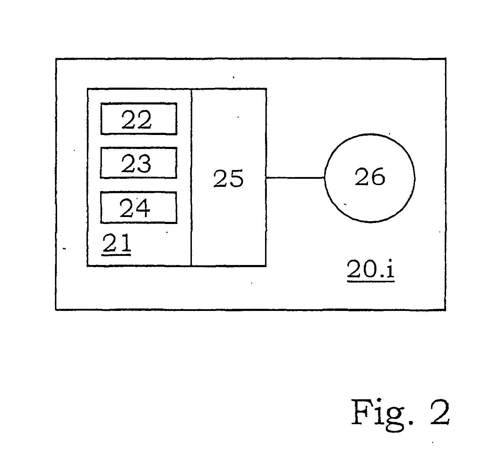

Die in Fig.1 gezeigten Module 20.1 bis 20.N dienen zur Durchführung der Bearbeitungsvorgänge in der Vorrichtung. Sie bewältigen jeweils unterschiedliche Aufgaben bei der Bearbeitung, können jedoch durch ein einheitliches Blockschaltbild beschrieben werden. Die Fig. 2 zeigt das Blockschaltbild eines solchen Moduls 20.i. Es besitzt eine eigene Modulsteuerung 21, die aus einem Prozessor 22 und einer Speichereinheit 23 besteht, die analog zur Speichereinheit 12 der Steuereinrichtung 10 ist. Optional kann im Modul 20 auch eine Speichereinheit 24 für große Datenmengen vorgesehen werden.

Die Modulsteuerung 21 kommuniziert über einen Wandler 25 mit hier nur symbolisch dargestellten Manipulatoren 26. Im allgemeinen stellt der Wandler 25 einen Analog/Digital-Wandler dar, mit dessen Hilfe die Signale zwischen der Modulsteuerung 21 und den Manipulatoren 26 von analogen in digitale Signale oder umgekehrt umgewandelt werden. Die notwendigen Bearbeitungsvorgänge der Banknoten werden von den Manipulatoren 26 durchgeführt. Unter dem Begriff der Manipulatoren 26 werden sowohl mechanischen Komponenten, wie Transportriemen, Antriebsrollen, Weichen, Lichtschranken oder ähnlichem, als auch Sensoren für optische, magnetische oder elektrische Eigenschaften der Banknoten verstanden.

Die Fig.1 zeigt weiterhin eine Verbindung 30 zum Datenaustausch der Module 20.1 bis 20.N untereinander und mit der Steuereinrichtung 10. Die Verbindung 30 kann beispielsweise durch einen Datenbus realisiert werden. Bei Bedarf kann der Datenbus zu einem Netzwerk ausgeweitet werden.

Die Sicherheitseinrichtung 40 ist an die Verbindung 30 angeschlossen und besteht im wesentlichen aus den gleichen Komponenten wie die Steuereinrichtung 10. Auch sie kann beispielsweise durch einen handelsüblichen PC realisiert werden. Die Sicherheitseinrichtung 40 umfasst einen Prozessor 41, einen Speicherbereich 42, analog zur Speichereinheit 12 der Steuereinrichtung 10 und einen Speicher 43 für große Datenmengen. Auch hier kann optional ein Speicher 44 vorgesehen werden, so daß die Daten parallel auf der Speichereinheit 43 und der Speichereinheit 44 abgelegt werden können.

Die Verbindung der Sicherheitseinrichtung 40 mit der Verbindung 30 wird durch eine Schnittstelle 46 hergestellt. Die Sicherheitseinrichtung 40 kann mittels der Schnittstelle 46 die auf der Verbindung 30 ausgetauschten Daten lesen und bei Bedarf auch Daten über die Verbindung 30 übertragen. Die Schnittstelle 46 ist so ausgelegt, daß die auf der Sicherheitseinrichtung 40 gespeicherten Daten nicht über die Verbindung 30 verändert werden können. Eine Manipulation der Sicherheitseinrichtung 40 über die Verbindung 30 ist somit ausgeschlossen. Notwendige Veränderungen von Daten der Sicherheitseinrichtung 40 werden vom Bediener mit Hilfe eines über eine Schnittstelle 47 angeschlossenen Bedienerterminals 48 vorgenommen.

Die Sicherheitseinrichtung 40 kann in einer Sicherheitszone 49 untergebracht werden. Sie stellt die Sicherung der Sicherheitseinrichtung 40 gegen einen physikalischen Zugriff von außen dar und kann beispielsweise durch einen separaten Raum realisiert werden, zu dem nur autorisiertes Personal Zutritt hat.

Zur weiteren Erhöhung der Sicherheit kann die Sicherheitseinrichtung 40 auch galvanisch von der Verbindung 30 entkoppelt werden. Weiterhin kann eine von der Steuereinrichtung 10 unabhängige Stromversorgung für die Sicherheitseinrichtung 40 vorgesehen werden.

Die Sicherheitseinrichtung 40 überwacht zum einen die Daten, die über die Verbindung 30 ausgetauscht werden, auf ihre Richtigkeit. Sie kann dabei Daten erkennen, die auf eine Manipulation an der Vorrichtung in betrügerischer Absicht schließen lassen.

Weiterhin kann die Sicherheitseinrichtung 40 parallel zur Steuereinrichtung 10 ein Protokoll aus den über die Verbindung 30 ausgetauschten Daten erstellen. Durch den Vergleich der Protokolle auf der Steuereinrichtung 10 und der Sicherheitseinrichtung 40 können Störungen in der Datenverarbeitung detektiert werden.

Zur Erstellung eines Protokolls auf dem Sicherheitsrechner 40 ist es nötig, daß die Komponenten alle protokollrelevanten Daten durch die Verbindung 30 übertragen. Hierzu zählen im speziellen auch die Daten, die vom Bediener direkt mittels des Bedienerterminals 18 oder über die DFÜ-Einrichtung 15 in die Steuereinrichtung 10 eingegeben werden.

Durch eine parallele Protokollerstellung ist es möglich, neue Programme für die Steuereinrichtung 10 durch die Sicherheitseinrichtung 40 auf eventuelle Fehler überprüfen zu lassen, bevor diese Programme für den Betrieb der Bearbeitungsvorrichtung freigegeben werden. Dies führt zu einer wesentlichen Erleichterung bei der Wartung der Bearbeitungsvorrichtung.

Durch die DFÜ-Einrichtung 15 der Steuereinrichtung 10 besteht die Möglichkeit, auch von externen Einrichtungen auf die Steuereinrichtung 10 zuzugreifen. Dies ist beispielsweise von Vorteil, wenn für mehrere Bearbeitungsvorrichtungen eine übergeordnete Statistik erstellt werden soll. Hierzu können dann die notwendigen Daten direkt von einer zentralen Einrichtung von den Bearbeitungsmaschinen erhalten werden.

Weiterhin ist es möglich, über die DFÜ-Einrichtung 15 neue Daten von einer externen Einrichtung auf die Steuereinrichtung 10 zu übertragen. Speziell können zu Diagnosezwecken von den externen Einrichtungen entsprechende Programme über die Steuereinrichtung 10 in die einzelnen Module 20.i geladen und dann ausgeführt werden. Die Ergebnisse dieser Programme können dann in der externen Einrichtung ausgewertet werden. Hierdurch entsteht eine weitere Erleichterung bei der Wartung der Bearbeitungsvorrichtung.

Die Überwachung durch die Sicherheitseinrichtung 40 gewährleistet, daß von den externen Einrichtungen keine Manipulationen in betrügerischer Absicht durchgeführt werden können. Ein externer Zugriff auf die Steuereinrichtung 10 durch eine DFÜ-Einrichtung 15 stellt also in diesem Fall kein erhöhtes Sicherheitsrisiko dar. Die Sicherheitseinrichtung 40 selbst kann aufgrund der oben beschriebenen Maßnahmen nicht von externen Einrichtungen manipuliert werden.

Zur weiteren Erhöhung der Sicherheit der Bearbeitungsvorrichtung können die über die Verbindung 30 ausgetauschten Daten mit beliebigen kryptografischen Algorithmen gesichert werden. Aufgrund der hohen Datenübertragungsraten in der Bearbeitungsvorrichtung hängt die Wahl des geeignetsten kryptografischen Algorithmus lediglich von der für die Sicherung zur Verfügung stehenden Zeit ab. Man wird also den Algorithmus wählen, der in der für die Sicherung zur Verfügung stehenden Zeit die höchstmögliche Sicherheit gewährleistet.

## Patentansprüche

1. Vorrichtung zur Bearbeitung von Banknoten, umfassend
- Module (20.1-20.N) zum Bearbeiten von Banknoten, wobei die Module (20.1-20.N) dem
- Vereinzeln der Banknoten aus einem Stapel oder
- Prüfen der Banknoten auf Zustand oder Echtheit oder
- Steuern des Transportes der Banknoten oder
- Stapeln der Banknoten oder
- Vernichten der Banknoten,
dienen,
- eine Steuereinrichtung (10), die die Banknotenbearbeitungsvorgänge steuert und
- mindestens eine Verbindung (30) zum Datenaustausch der Module (20.1-20.N) untereinander und mit der Steuereinrichtung (10),
**dadurch gekennzeichnet, daß** zusätzlich
- wenigstens eine Sicherheitseinrichtung (40) vorgesehen ist, die an die Verbindung (30) zum Datenaustausch der Module (20.1-20.N) untereinander und mit der Steuereinrichtung (10) angeschlossen ist und die die Funktion der Steuereinrichtung (10) und der Module (20.1-20.N) anhand der über die Verbindung (30) ausgetauschten Daten überwacht, wobei
- die Steuereinrichtung (10) und die Sicherheitseinrichtung (40) je ein Protokoll der über die Verbindung (30) ausgetauschten Daten erzeugen,
- wobei Mittel zum vergleich der erzeugten Protokolle vorhanden sind.

2. Vorrichtung nach Anspruch 1, **dadurch gekennzeichnet, daß** über die Verbindung (30) nicht auf die Sicherheitseinrichtung (40) zugegriffen werden kann.

3. Vorrichtung nach Anspruch 1 oder 2, **dadurch gekennzeichnet, daß** die Sicherheitseinrichtung (40) physikalisch gegen einen Zugriff von außen gesichert ist.

4. Vorrichtung nach einem der Ansprüche 1 bis 3, **dadurch gekennzeichnet, daß** die Sicherheitseinrichtung (40) galvanisch von der Verbindung (30) entkoppelt ist.

5. Vorrichtung nach einem der Ansprüche 1 bis 4, **dadurch gekennzeichnet, daß** die Sicherheitseinrichtung (40) eine von der Stromversorgung der Steuereinrichtung (10) unabhängige Stromversorgung besitzt.

6. Vorrichtung nach Anspruch 1, **dadurch gekennzeichnet, daß** in der Steuereinrichtung (10) Mittel vorgesehen sind, die eine Kommunikation zwischen der Steuereinrichtung (10) und externen Einrichtungen zulassen.

7. Vorrichtung nach Anspruch 1, **dadurch gekennzeichnet, daß** die Module (20.1-20.N) jeweils eine eigene Modulsteuerung (21) aufweisen.

8. Vorrichtung nach einem der Ansprüche 1 bis 7, **dadurch gekennzeichnet, daß** die Verbindung (30) als Datenbus ausgeführt ist.

9. Vorrichtung nach einem der Ansprüche 1 bis 7, **dadurch gekennzeichnet, daß** die Verbindung (30) als Netzwerk ausgeführt ist.

10. Vorrichtung nach einem der Ansprüche 1 bis 9, **dadurch gekennzeichnet, daß** in der Steuereinrichtung (10) und/oder in der Sicherheitseinrichtung (40) doppelt ausgelegte Speichereinrichtungen (13,14,43,44) vorgesehen sind.

11. Verfahren zur Bearbeitung von Banknoten, bei dem die zur Bearbeitung der Banknoten notwendigen Daten zwischen mehreren Modulen (20.1-20.N) zum Bearbeiten von Banknoten untereinander und mit einer Steuereinrichtung (10) über eine Verbindung (30) ausgetauscht werden, **dadurch gekennzeichnet, daß** diese Daten durch eine Sicherheitseinrichtung (40) dadurch überwacht werden, daß die Sicherheitseinrichtung (40) und die Steuereinrichtung (10) jeweils ein Protokoll der ausgetauschten Daten erstellen und diese Protokolle miteinander verglichen werden.

12. Verfahren nach Anspruch 11, **dadurch gekennzeichnet, daß** die Steuereinrichtting (10) mit externen Einrichtungen kommuniziert.

13. Verfahren nach Anspruch 11 oder 12, **dadurch gekennzeichnet, daß** die Daten verschlüsselt über die Verbindung (30) übertragen werden.

14. Verfahren nach einem der Ansprüche 11 bis 13, **dadurch gekennzeichnet, daß** Daten redundant gespeichert werden.

## Claims

1. An apparatus for processing bank notes comprising:
- modules (20.1-20.N) for processing bank notes, said modules serving to
- single bank notes from a stack, or
- test the state or authenticity of bank notes, or
- control the transport of bank notes, or
- stack bank notes, or
- destroy bank notes,
- a control device (10) for controlling the bank note processing operations, and
- at least one connection (30) for data exchange among the modules (20.1-20.N) themselves and between them and the control device (10),
**characterized in that** additionally
- at least one safety device (40) is provided which is connected to the connection (30) for data exchange among the modules (20.1-20.N) themselves and between them and the control device (10) and which monitors the functioning of the control device (10) and the modules (20.1-20.N) with reference to the data exchanged via the connection (30),
- the control device (10) and the safety device (40) each generating a log of the data exchanged via the connection (30),
- means being present for comparing the generated logs.

2. An apparatus according to claim 1, **characterized in that** the safety device (40) cannot be accessed via the connection (30).

3. An apparatus according to claim 1 or 2, **characterized in that** the safety device (40) is protected physically against access from outside.

4. An apparatus according to any of claims 1 to 3, **characterized in that** the safety device (40) is decoupled electrically from the connection (30).

5. An apparatus according to any of claims 1 to 4, **characterized in that** the safety device (40) has a current supply independent from the current supply of the control device (10).

6. An apparatus according to claim 1, **characterized in that** means are provided in the control device (10) for permitting communication between the control device (10) and external devices.

7. An apparatus according to claim 1, **characterized in that** the modules (20.1-20.N) each have their own module control (21).

8. An apparatus according to any of claims 1 to 7, **characterized in that** the connection (30) is executed as a data bus.

9. An apparatus according to any of claims 1 to 7, **characterized in that** the connection (30) is executed as a network.

10. An apparatus according to any of claims 1 to 9, **characterized in that** doubly designed memory means (13, 14, 43, 44) are provided in the control device (10) and/or in the safety device (40).

11. A method for processing bank notes wherein the data necessary for processing the bank notes are exchanged among a plurality of modules (20.1-20.N) for processing bank notes and between said modules and a control device (10) via a connection (30), **characterized in that** said data are monitored by a safety device (40) by the safety device (40) and the control device (10) each preparing a log of the exchanged data and said logs being compared.

12. A method according to claim 11, **characterized in that** the control device (10) communicates with external devices.

13. A method according to claim 11 or 12, **characterized in that** the data are transmitted via the connection (30) in encoded form.

14. A method according to any of claims 11 to 13, **characterized in that** stored data are stored redundantly.

## Revendications

1. Dispositif pour le traitement de billets de banque, comprenant :
- des modules (20.1 à 20.N) pour le traitement de billets de banque, modules (20.1 à 20.N) qui servent :
- à isoler les billets de banque à partir d'une pile, ou
- à examiner les billets de banque en ce qui concerne leur état ou leur authenticité, ou
- à commander le transport des billets de banque, ou
- à empiler les billets de banque, ou
- à détruire les billets de banque,
- et un organe de contrôle (10), qui contrôle les processus de traitement des billets de banque, et
- au moins une liaison (30) pour l'échange de données des modules (20.1 à 20.N) entre eux et avec l'organe de contrôle (10),
**caractérisé en ce que**, de façon supplémentaire,
- est prévu au moins un organe de sécurité (40), qui est relié à la liaison (30) pour l'échange de données des modules (20.1 à 20.N) entre eux et avec l'organe de contrôle (10), et qui surveille le fonctionnement de l'organe de contrôle (10) et des modules (20.1 à 20.N) à l'aide des données échangées via la liaison (30),
- **en ce que** l'organe de contrôle (10) et l'organe de sécurité (40) créent chacun un rapport sur les données échangées via la liaison (30),
- et **en ce que** sont prévus des moyens pour comparer les rapports écrits ainsi créés.

2. Dispositif selon la revendication 1, **caractérisé en ce qu'**il est impossible d'accéder à l'organe de sécurité (40) par l'intermédiaire de la liaison (30).

3. Dispositif selon la revendication 1 ou 2, **caractérisé en ce que** l'organe de sécurité (40) est protégé physiquement contre un accès depuis l'extérieur.

4. Dispositif selon l'une des revendications 1 à 3, **caractérisé en ce que** l'organe de sécurité (40) est découplé galvaniquement de la liaison (30).

5. Dispositif selon l'une des revendications 1 à 4, **caractérisé en ce que** l'organe de sécurité (40) comporte une alimentation en courant électrique indépendante de l'alimentation en courant électrique de l'organe de contrôle (10).

6. Dispositif selon la revendication 1, **caractérisé en ce que** dans l'organe de contrôle (10) sont prévus des moyens, qui autorisent une communication entre l'organe de contrôle (10) et des organes extérieurs.

7. Dispositif selon la revendication 1, **caractérisé en ce que** les modules (20.1 à 20.N) comportent chacun un contrôle de module (21) propre.

8. Dispositif selon l'une des revendications 1 à 7, **caractérisé en ce que** la liaison (30) est réalisée sous la forme de bus de données.

9. Dispositif selon l'une des revendications 1 à 7, **caractérisé en ce que** la liaison (30) est réalisée sous la forme d'un réseau.

10. Dispositif selon l'une des revendications 1 à 9, **caractérisé en ce que**, dans l'organe de contrôle (10) et/ou dans l'organe de sécurité (40) sont prévus des organes de stockage ou de mémoire (13, 14, 43, 44) réalisés en double.

11. Procédé de traitement de billets de banque, dans lequel les données nécessaires pour le traitement des billets de banque sont échangées entre plusieurs modules (20.1 à 20.N) entre eux pour le traitement de billets de banque et avec un organe de contrôle (10) par l'intermédiaire d'une liaison (30), **caractérisé en ce que** ces données sont surveillées par un organe de sécurité (40) de sorte que l'organe de sécurité (40) et l'organe de contrôle (10) établissent chacun un rapport sur les données échangées et que ces rapports soient comparés les uns avec les autres.

12. Procédé selon la revendication 11, **caractérisé en ce que** l'organe de contrôle (10) communique avec les organes extérieurs.

13. Procédé selon la revendication 11 ou 12, **caractérisé en ce que** les données sont transmises sous forme codée par l'intermédiaire de la liaison (30).

14. Procédé selon l'une des revendications 11 à 13, **caractérisé en ce que** les données sont mises en mémoire de façon redondante.
